# EUROPÄISCHE PATENTSCHRIFT

(11) **EP 1 633 008 B1**
(45) Veröffentlichungstag und Bekanntmachung des Hinweises auf die Patenterteilung: **14.04.2010**
(21) Anmeldenummer: 05008203.1
(22) Anmeldetag: 03.12.2003
(51) Int. Cl.: H01M 2/04, H01M 2/12

(54) **Stopfen (Diagnosesonde) für eine Mehrzellen-Batterie**
Plug (diagnostic probe) for a multi-cell battery
Bouchon (sonde diagnostique) pour une battérie multi-éléments

(30) Priorität: 03.12.2002 DE 20218730 U
(43) Veröffentlichungstag der Anmeldung: 08.03.2006
(62) Teilanmeldung aus: 03027792.5
(73) Patentinhaber: Akkumulatorenfabrik Moll GmbH & Co. KG, 96231 Bad Staffelstein (DE); Banner GmbH, 4021 Linz (AT)
(72) Erfinder: Gelbke, Manfred, 96231 Bad Staffelstein (DE); Schumann, Peter, 96253 Untersiemau (DE); Holzleitner, Peter, 4030 Linz (AT); Maleschitz, Norbert, 4609 Thalheim bei Weis (AT)
(74) Vertreter: Naumann, Ulrich

(56) Entgegenhaltungen:
- WO-A-95/19050
- DE-A1- 2 419 847
- DE-A1- 3 444 011
- DE-U1- 9 101 356
- DE-U1- 29 722 131
- DE-U1- 29 821 994

## Beschreibung

Die Erfindung betrifft einen Stopfen oder eine Diagnosesonde für eine Batterie, mit einem Kopf, an dem eine Dichtung vorgesehen ist.

Aus der DE-U-90 15 535 ist eine Batterie bekannt, die ein Batteriegehäuse und einen Batteriedeckel aufweist. In dem Batteriegehäuse sind mehrere Zellen, nämlich sechs Zellen vorgesehen. Ferner ist mindestens eine Öffnung vorhanden, die dazu dient, die aus den Zellen austretenden Gase abzuleiten.

Aus der DE-A-34 44 011 ist eine sogenannte Kamina-Batterie bekannt. In dem Deckel der zentralentgasten Kamina-Batterie befindet sich jeweils eine Öffnung für jede der Zellen, die dazu dient, Schwefelsäure in die jeweilige Zelle einzufüllen. Die Öffnungen der Zellen werden durch jeweils einen Gewindestopfen verschlossen, in dem jeweils eine O-Ring-Dichtung zum Schutz gegen Gas- und Säureaustritt vorgesehen ist.

Aus der DE-U-91 01 356 ist ein gattungsbildender Stopfen bekannt, bei dem an einem Kopf eine Dichtung vorgesehen ist. Genauer gesagt wirkt dort eine Dichtung zwischen dem Kopf und der Batteriehaube bzw. dem Batteriedeckel. Die so realisierte Abdichtung ist zwar in Bezug auf die Batteriesäure hinreichend, jedoch nicht in Bezug auf innerhalb der Zellen der Batterie entstehende Gase. Dort entstehen nämlich regelmäßig explosive Dämpfe, die auf keinen Fall über den Randbereich des Stopfens nach außen gelangen dürfen. Es besteht die Gefahr eines elektrischen Ladungsdurchschlags, insbesondere dann, wenn eine Person, die eine elektrische Ladung aufgenommen hat, die Batterie berührt. Eine Explosion durch Berühren der Batterie kann die Folge sein. In Bezug auf den elektrischen Ladungsdurchschlag ist die bekannte Batterie unzureichend.

Aus der DE-U-298 21 994 ist ebenfalls ein Stopfen der gattungsbildenden Art bekannt. Auch dort wirkt zwischen dem Kopf des Stopfens und dem Batteriedeckel eine Dichtung, die in Bezug auf den elektrischen Ladungsdurchschlag unzureichend ist.

Gleiches gilt für den aus der DE-U-297 22 131 bekannten Stopfen, dessen Kopf mit einer entsprechenden Dichtung ausgestattet ist. Auch hier wirkt die Dichtung zwischen dem Stopfen und dem Batteriedeckel.

Aus der DE-A-34 44 011 ist ebenfalls ein Stopfen mit einer zwischen dem Kopf und dem Gehäusedeckel wirkenden Dichtung bekannt. Hier gilt die gleiche Problematik wie bei den zuvor erörterten Druckschriften.

Die WO-A-95/19050 zeigt ebenfalls einen Stopfen mit Kopf und Dichtung, wobei die Dichtung auch hier zwischen dem Kopf und dem Gehäusedeckel wirkt.

Gleiches gilt für die DE-A-24 19 847, aus der ebenfalls ein einschlägiger Stopfen mit Dichtung vorgesehen ist.

Sämtliche aus dem druckschriftlichen Stand der Technik bekannte Batteriestopfen zeigen eine gefestigte, ja sogar festgefahrene Technologie in Bezug auf die Abdichtung zwischen dem Stopfen und dem Batteriedeckel, wonach nämlich am Kopf des Stopfens eine Dichtung vorgesehen ist, die zwischen dem Kopf und dem Batteriedeckel wirkt. Genauer gesagt ist die Dichtung, meist als O-Ring ausgeführt, im Bereich zwischen dem Stopfen und dem Gehäusedeckel vorgesehen, wobei diese Dichtung beim Hineinschrauben des Stopfens verpresst wird. Dabei besteht die Gefahr, dass insbesondere nach mehrmaligem Hinein- und Herausschrauben des Stopfens die Dichtung aufgrund der enormen Reibung zwischen dem Stopfen und der Wandung des Gehäusedeckels verdreht oder gar beschädigt wird. Eine hinreichende Sicherheit gegen elektrischen Ladungsdurchschlag kann die aus dem Stand der Technik bekannte Dichtungsmaßnahme somit nicht bieten.

Der vorliegenden Erfindung liegt daher die Aufgabe zugrunde, den Stopfen der gattungsbildenden Art derart auszugestalten und weiterzubilden, dass über die Lebensdauer der Batterie hinweg eine hinreichend gute Sicherheit gegen elektrischen Ladungsdurchschlag, nicht zuletzt zur Vermeidung einer Explosion, realisiert ist.

Voranstehende Aufgabe ist durch die Merkmale des Patentanspruchs 1 gelöst. Danach ist der erfindungsgemäße Stopfen dadurch gekennzeichnet, dass die Dichtung eine radial nach außen weisende Dichtlippe aufweist.

Erfindungsgemäß ist erkannt worden, dass sich die aus dem Stand der Technik bekannten Nachteile in Bezug auf einen unzureichenden Schutz gegen einen elektrischen Ladungsdurchschlag überraschend einfach eliminieren lassen, nämlich durch eine ganz besondere Dichtung, die eine radial nach außen weisende Dichtlippe aufweist. Die Dichtung wirkt - wie im Stand der Technik - zunächst zwischen dem Stopfen bzw. des Kopfs des Stopfens und dem Gehäusedeckel. Aufgrund der zusätzlich vorgesehenen, nach außen weisenden Dichtlippe ragt die Dichtung bis nach außen und ist daher geeignet, im eingeschraubten Zustand des Stopfens von der Oberfläche her auf den Gehäusedeckel zu wirken. Jedenfalls schließt die Dichtlippe den Bereich zwischen dem Stopfen und dem Gehäusedeckel von außen ab und trägt die Dichtlippe im besonderen Maße Sorge dafür, dass ein Verdrehen der Dichtung innerhalb eines Spalts zwischen dem Stopfen und dem Gehäusedeckel, wie dies bei den bekannten O-Ringen der Fall ist, wirksam vermieden ist. Außerdem schmiegt sich die Dichtlippe in besonderem Maße in dem Bereich zwischen dem Kopf des Stopfens und dem Gehäusedeckel an und schließt somit nach außen hin den dort üblicherweise auftretenden - meist sehr kleinen - Spalt. Der erfindungsgemäße Stopfen liefert somit einen erheblichen Beitrag zum Schutz gegen einen elektrischen Ladungsdurchschlag.

Vorteilhafte Weiterbildungen sind in den Unteransprüchen beschrieben.

Vorteilhaft ist es, wenn die Dichtlippe derart verform bar ist, dass sie eine ebene, mit der Oberfläche des Stopfens bzw. der Diagnosesonde fluchtende Fläche bildet.

Vorzugsweise weist die Dichtung einen radialen Bereich auf.

Stattdessen oder zusätzlich kann die Dichtung einen axialen Bereich aufweisen.

Nach einer weiteren vorteilhaften Weiterbildung ist im Abstand von der Dichtung eine weitere Dichtung vorgesehen. Bei der weiteren Dichtung handelt es sich vorzugsweise um eine radiale Dichtung.

Vorzugsweise umfasst der Stopfen einen Grundkörper, eine darin angeordnete Seele und eine oder mehrere Weichkomponentendichtungen zwischen dem Grundkörper und der Seele. Die Seele ist insbesondere aus einem durchsichtigen Material gefertigt, vorzugsweise aus Kunststoff, beispielsweise aus Acrylglas. Sie kann als prismatische Kunststoff-Linse ausgebildet sein. Der Grundkörper ist vorzugsweise aus Kunststoff gefertigt, vorzugsweise aus hartem Kunststoff. Er kann die "Hartkomponente" der Diagnosesonde bilden. Der Grundkörper und die Weichkomponantendichtungert werden vorzugsweise im sogenannten 2K-Verfahren (Zwei-Kunststoff-Komponenten-Verfahren) gefertigt, wobei der Grundkörper die Hartkomponente bildet und die Weichkomponentendichtungen die Weichkomponente bilden.

Vorzugsweise sind an der Außenseite des Grundkörpers eine oder mehrere Weichkomponentendichtungen vorgesehen. Hierdurch kann eine Abdichtung zum Batteriegehäuse oder zum Batteriedeckel realisiert werden.

Vorteilhaft ist es, wenn eine oder mehrere oder alle Weichkomponentendichtungen an den Grundkörper angespritzt sind.

Eine weitere vorteilhafte Weiterbildung ist dadurch gekennzeichnet, dass in dem Grundkörper ein Verbindungskanal für die Weichkomponente vorgesehen ist. Hierdurch wird der Herstellungsvorgang vereinfacht. Insbesondere kann erreicht werden, dass nur ein einziger Anspritzpunkt für die Weichkomponente erforderlich ist.

Nach einer weiteren vorteilhaften Weiterbildung sind an der Außenseite der Seele einer oder mehrere Wulste vorgesehen, die in die Weichkomponentendichtung eindrückbar sind. Die Wulste können eine flache und eine steile Flanke aufweisen. Sie können insbesondere derart ausgestaltet sein, dass sie nach Art eines Widerhakens wirken.

Eine weitere vorteilhafte Weiterbildung ist dadurch gekennzeichnet, dass die Weichkomponentendichtung zwischen dem Grundkörper und der Seele als durchgehende Innendichtung ausgestaltet ist.

Nach einer weiteren vorteilhaften Weiterbildung ist die Seele, insbesondere der Seelenkörper, mit einem Kragen versehen, der in dem Grundkörper, insbesondere am unteren Ende eines Ansatzes des Grundkörpers, fixierbar ist.

In dem Grundkörper kann ein Entgasungsloch vorgesehen sein. Dies ist insbesondere dann vorteilhaft, wenn die Diagnosesonde in einer Batterie nach Art der eingangs beschriebenen Kamina-Batterie eingesetzt werden soll.

Ausführungsbeispiele der Erfindung werden nachstehend anhand der beigefügten Zeichnung im Einzelnen erläutert. In der Zeichnung zeigt
- Fig.1 1: eine Ausführungsform des erfindungsgemäßen Stopfens für einen Doppeldeckel in einer seitlichen Schnittansicht,
- Fig. 2: den Grundkörper des Stopfens gemäß Fig. 1 in einer seitlichen Schnittansicht,
- Fig. 3: einen Gewindestopfen für einen Doppeldeckel in einer seitlichen Schnittansicht,
- Fig. 4: eine weitere Ausführungsform des Stopfens für eine Kamina-Batterie in einer teilweisen seitlichen Schnittansicht,
- Fig. 5: den Stopfen gemäß Fig. 1 und 2 im eingebauten Zustand in einer seitlichen Schnittansicht,
- Fig. 6: eine vergrößerte Teilansicht der Fig. 5,
- Fig. 7: den Stopfen gemäß Fig. 3 in der Einbausituation vor dem vollständigen Einbau in einen Doppeldeckel,
- Fig. 8: eine der Fig. 7 entsprechende Darstellung mit vollständig eingeschraubtem Stopfen,
- Fig. 9: eine vergrößerte Teilansicht der Fig. 7,
- Fig. 10: eine vergrößerte Teilansicht der Fig. 8,
- Fig. 11: den Stopfen gemäß Fig. 1 und 2 in der Einbausituation vor dem vollständigen Einbau in einen Doppeldeckel,
- Fig. 12: eine der Fig. 11 entsprechende Darstellung mit vollständig eingeschraubtem Stopfen,
- Fig. 13: einen Stopfen für eine Kamina-Batterie in der Einbausituation vor dem vollständigen Einbau in den Deckel der Kamina-Batterie und
- Fig. 14: eine der Fig. 3 entsprechende Darstellung mit vollständig eingeschraubtem Stopfen.

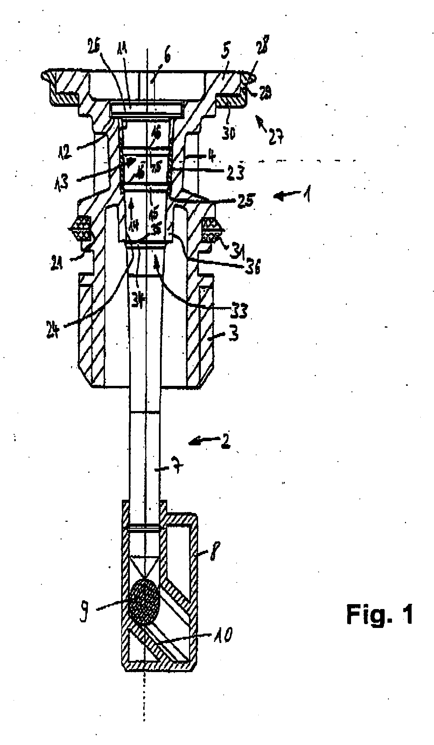

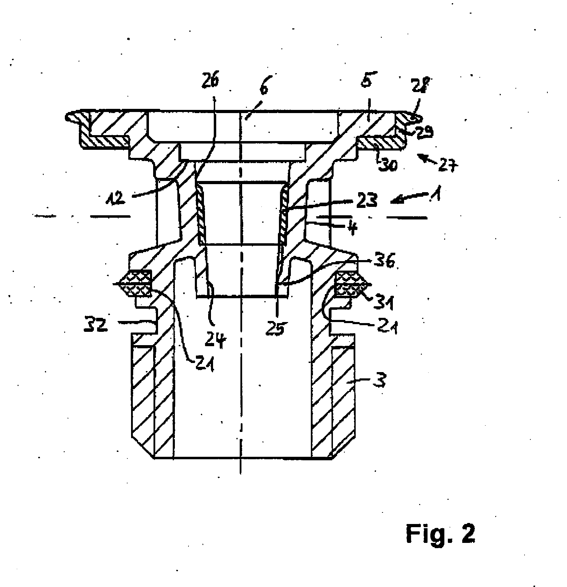

Bei der Ausführungsform eines erfindungsgemäßen Stopfens, die in den Figuren 1 und 2 gezeigt ist, ist die Weichkomponentendichtung 23 zwischen dem Grundkörper 1 und der Seele 2 als durchgehende Innendichtung ausgestaltet. In dem Grundkörper 1 ist eine kegelförmige Innenfläche 24 vorhanden, die einen nach außen weisenden Absatz 25 aufweist, an dem die durchgehende Innendichtung 23 anliegt. Die kegelförmige Innenfläche 24 fluchtet mit der Innenfläche der Innendichtung 23. An den Absatz 25 schließt sich ein weiterer kegelförmiger Bereich 26 des Grundkörpers 1 an, an dem die Außenfläche der Innendichtung 23 anliegt.

An dem Kopf 5 des Grundkörpers 1 ist eine Dichtung 27 vorgesehen, die eine radial nach außen weisende Dichtlippe 28, einen daran anschließenden, radialen Bereich 29 und einen daran anschließenden axialen Bereich 30 aufweist. Die Dichtung 27 umfasst den äußeren unteren Randbereich des Kopfes 5, wie insbesondere aus Fig. 1 und 2 ersichtlich. Am radial inneren Ende der Dichtlippe 28 beginnt der von dort nach unten weisende radiale Bereich 29, an dessen unteres Ende sich der axiale Bereich 30 in Richtung nach innen anschließt. Durch die Dichtung 27 wird ein verbesserter Schutz gegen einen elektrischen Ladungsdurchschlag erzeugt. Zum einen wird dieser Schutz durch die Dichtlippe 28 erzeugt, zum anderen durch die lange Strecke zwischen dem Kopf 5 und dem zugehörigen Batteriedeckel bzw. Batteriegehäuse, die durch die Dichtung 27, nämlich deren radialen Bereich 29 und deren axialen Bereich 30, ausgefüllt wird. Daraus ergibt sich eine lange Strecke für den Durchschlag einer elektrischen Ladung.

Die Dichtung 27 kann aus einer Weichkomponente hergestellt sein. Sie kann an den Grundkörper 1 angespritzt sein.

Im Abstand von der Dichtung 27 ist eine weitere äußere Dichtung 31 vorgesehen, die als Weichkomponente ausgestaltet sein kann. Die Dichtung 31 ist derart ausgestaltet, dass zwischen dem Bereich, in dem sich die Nut 21 befindet, und dem Außengewinde 3 ein Zwischenbereich 32 mit einem geringeren Durchmesser vorgesehen ist.

Die Wulste 13, 14 drücken sich in die durchgehende Innendichtung 23. Unterhalb des unteren Wulstes 14 ist der Seelen Körper 7 mit einem Kragen 33 versehen, der eine flache Flanke 34 und eine steile Flanke 35 aufweist. Die nach unten weisende flache Flanke 34 wirkt als Einlaufschräge bei der Montage der Seele 2, die durch eine Bewegung nach unten erfolgt. Nach Erreichen der Endposition, die in Fig. 1 gezeigt ist, liegt der Absatz 11 der Seele 2 an dem Absatz 12 in dem Grundkörper 1 an. Ferner liegt in dieser Stellung die steile Flanke 35 am unteren Ende des Ansatzes 36, in dem die kegelförmige Innenfläche 24 vorgesehen ist, an, so dass die Seele 2 in dem Grundkörper 1 zuverlässig fixiert ist.

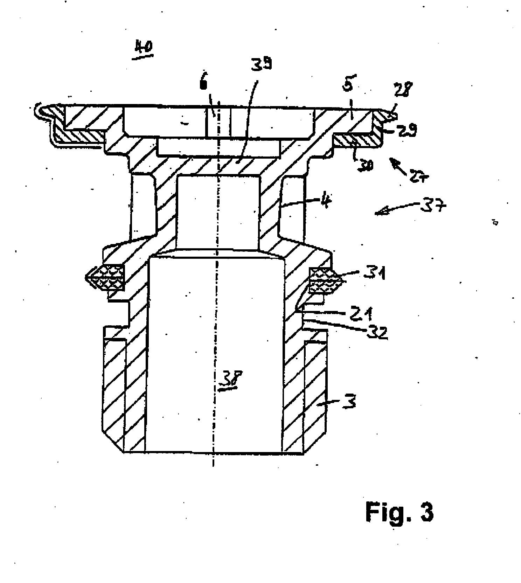

Fig. 3 zeigt einen Gewindestopfen für einen Doppeldeckel, der ähnlich wie der Grundkörper 1 der Ausführungsform gemäß Fig. 1 und 2 ausgestaltet ist. Im Unterschied zu dem Grundkörper 1 für die Diagnosesonde ist bei dem Gewindestopfen 37 der Innenraum 38 durch eine Wand 39 gegenüber der Außenseite 40 abgeschlossen. Die Dichtungen 27 und 31 sind bei dem Gewindestopfen 37 genauso ausgebildet wie bei der Diagnosesonde bzw. dem Grundkörper 1 gemäß Fig. 1 und 2. Der Gewindestopfen 37 ist mit dem Werkzeug für die Diagnosesonde bzw. den Grundkörper 1 der Ausführungsform gemäß Fig. 1 und 2 und einem Werkzeugwechseleinsatz herstellbar. Der Gewindestopfen 37 bzw. dessen Verschraubungsgrundkörper kann in dem Verschraubungswerkzeug für die Diagnosesonde bzw. den Grundkörper nach Fig. 1 und 2 über einen Werkzeugwechseleinsatz hergestellt werden. Der Gewindestopfen 37 und die Diagnosesonde bzw. der Grundkörper 1 gemäß Fig. 1 und 2 bilden einen Bausatz.

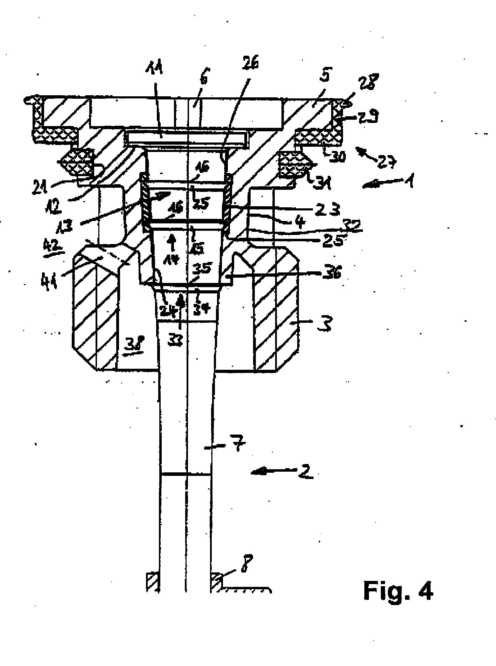

Fig. 4 zeigt eine weitere Ausführungsform einer Diagnosesonde bzw. eines Stopfens, die insbesondere für die eingangs beschriebene Kamina-Batterie geeignet ist und bei der entsprechende Teile mit entsprechenden Bezugszeichen versehen sind. Hier ist oberhalb des Außengewindes 3 eine Entgasungsöffnung 41 vorhanden, die den Innenraum 38 des Grundkörpers 1 mit einem Entgasungskanal 42 verbindet.

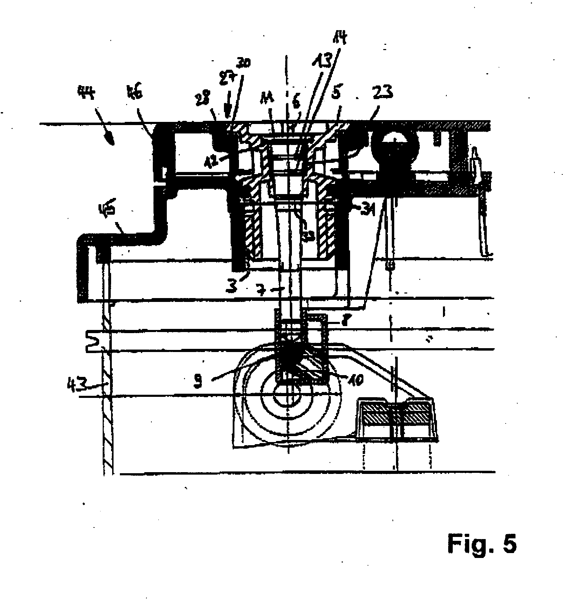

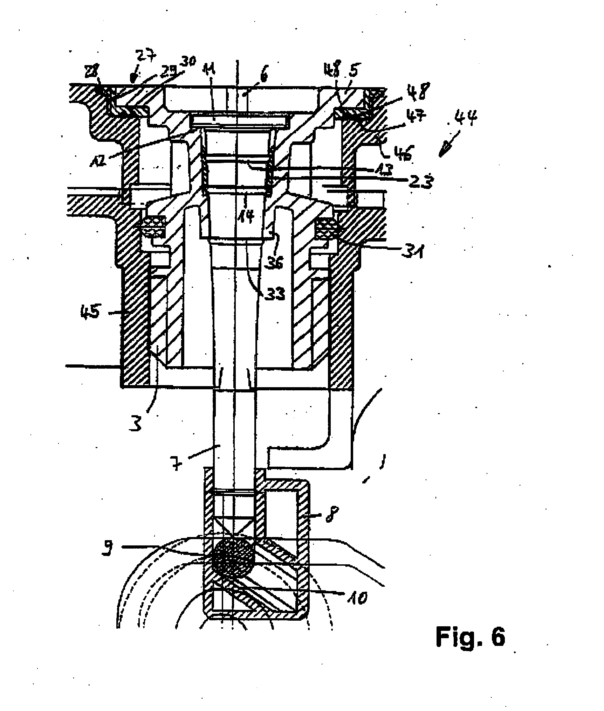

In Fig. 5 und 6 ist die Diagnosesonde gemäß Fig. 1 und 2 im eingebauten Zustand dargestellt. Das Batteriegehäuse 43 ist durch einen Batteriedeckel 44 geschlossen, der aus einem Unterdeckel 45 und einem Oberdeckel 46 besteht. Die Abdichtung gegenüber dem Unterdeckel 45 erfolgt durch die äußere untere Weichkomponentendichtung 31, die Abdichtung gegenüber dem Oberdeckel 46 erfolgt durch die obere äußere Weichkomponentendichtung 27.

Der axiale Bereich 30 der Dichtung 27 liegt auf einem entsprechenden Absatz 47 in dem Oberdeckel 46 auf. Auf der Oberfläche des Absatzes 47 sind ringförmige Schneiden 48 vorgesehen, die konzentrisch zueinander verlaufen und die einen im Wesentlichen dreieckförmigen Querschnitt aufweisen, der mit der Spitze nach oben weist. Der Spitzenwinkel ist etwa 90°. Die Schneiden 48 drücken sich in den axialen Bereich 30 der Dichtung 27 ein, wodurch die Dichtwirkung weiter verbessert wird. Die Weichkomponente kann aus TPE oder EPOM bestehen.

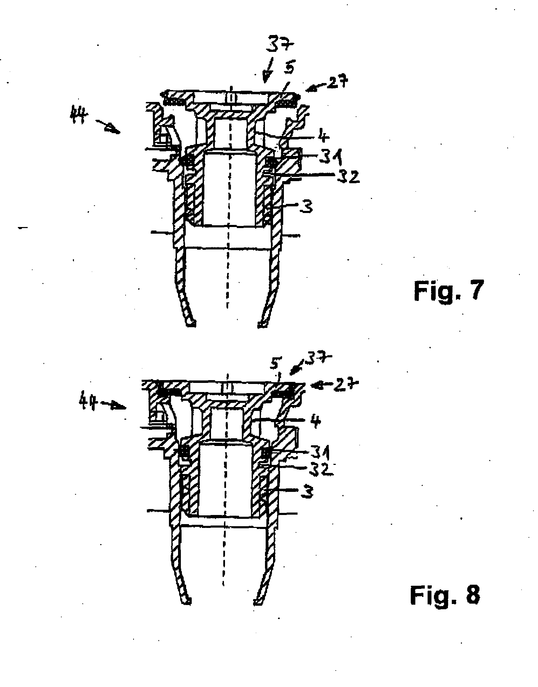

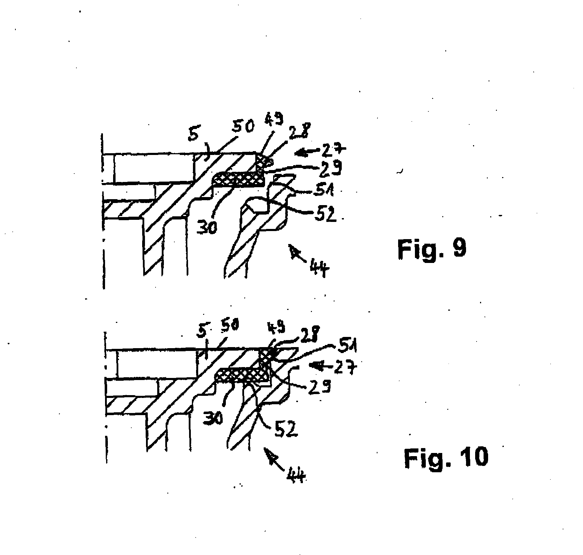

In Fig. 7 bis 10 ist die Einbausituation eines Stopfens gemäß Fig. 3 dargestellt. Fig. 7 zeigt die Eindrehsituation nach Beginn der Verschraubung. In Fig. 8 ist der vollständig eingeschraubte, fertig montierte Stopfen gezeigt. Die radial nach außen weisende Dichtlippe 28 hat ein dreieckförmiges Profil, dessen Spitze nach außen gerichtet ist und dessen obere Seitenfläche 49 in der insbesondere aus Fig. 9 ersichtlichen Weise zur Oberfläche 50 des Gewindestopfens 37 nach unten geneigt ist. Durch das vollständige Einschrauben des Gewindestopfens 37 wird die Dichtlippe 28 an einen entsprechenden schrägen Absatz 51 in den Batteriedeckel gedrückt, so dass die obere Seitenfläche 49 in der insbesondere aus Fig. 10 ersichtlichen Weise eine mit der Oberfläche 50 des Gewindestopfens 37 fluchtende Fläche bildet.

In dem Batteriedeckel 44 ist im Abstand von dem schrägen Absatz 51 eine nach oben weisende, abgerundete Dichtkante 52 vorgesehen, die sich im vollständig eingeschraubten Zustand des Gewindestopfens 37 gemäß Fig. 10 in den axialen Bereich 30 der Dichtung 27 eindrückt. Durch die Auflage der radialen Dichtlippe 28 wird eine erste Dichtbarriere gebildet. Durch die sich in den axialen Bereich 30 der Dichtung 27 eindrückende Dichtkante 52 wird eine zweite Dichtbarriere gebildet. Zwischen den beiden Dichtbarrieren verläuft der Batteriedeckel 44 im Abstand von der Dichtung 27. Durch den Abstand zwischen den beiden Dichtbarrieren entsteht ein säurefreier Bereich, dessen Länge eine erhöhte Sicherheit gegen elektrischen Durchschlag erzeugt. Diese erhöhte Sicherheit besteht auch dann, wenn die Batterie in eine Kipplage gerät.

Die radiale Dichtlippe 28 dichtet den Spalt zwischen dem Kopf 5 und dem entsprechenden umgebenden Randbereich des Batteriedeckels 44 ab. Dadurch wird eine im Wesentlichen axial wirkende Dichtung geschaffen. Die nach außen weisende Dichtlippe 28 am Kopf 5 des Gewindestopfens 37 bildet auf diese Weise eine axiale Abdeckung für den Spalt zwischen dem Kopf 5 und der ihn umgebenden Öffnung in dem Batteriedeckel 44.

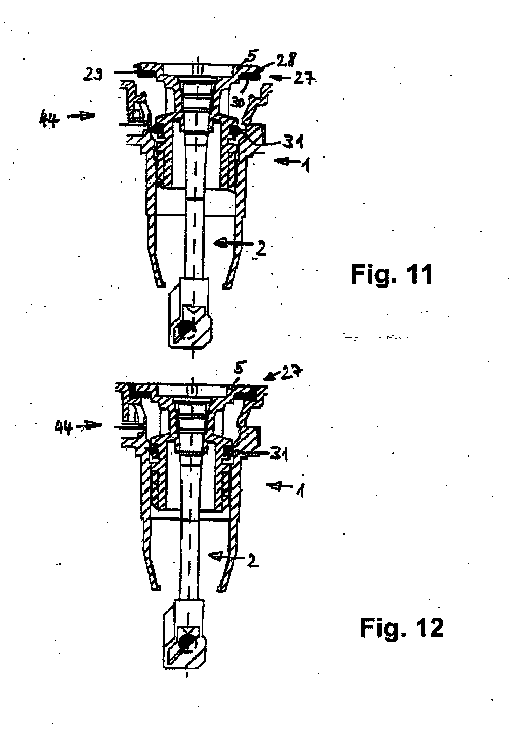

In den Fig. 11 und 12 ist die Einbausituation der Diagnosesonde gemäß Fig. 1 und 2 in zwei den Fig. 7 und 8 entsprechenden Darstellungen gezeigt.

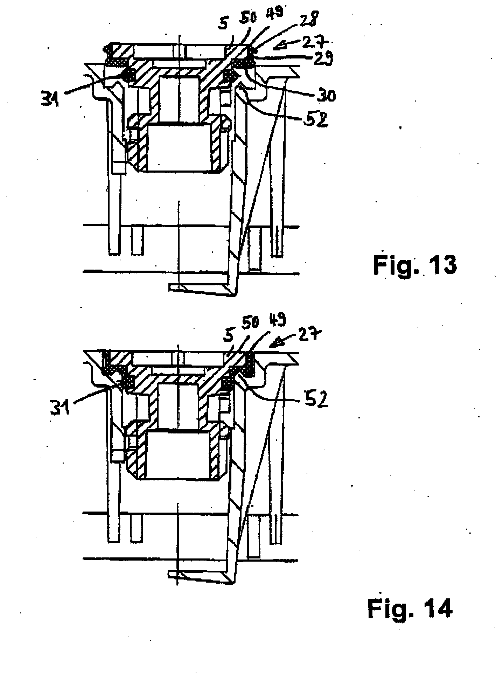

Die Fig. 13 und 14 zeigen entsprechende Darstellungen der Einbausituation eines Gewindestopfens für eine Kamina-Batterie.

## Patentansprüche

1. Stopfen oder Diagnosesonde für eine Batterie, mit einem Kopf (5), an dem eine Dichtung (27) vorgesehen ist,
**dadurch gekennzeichnet, dass** die Dichtung (27) eine radial nach außen weisende Dichtlippe (28) aufweist.

2. Stopfen nach Anspruch 1, **dadurch gekennzeichnet, dass** die Dichtlippe (28) derart verformbar ist, dass sie eine ebene, mit der Oberfläche (50) des Stopfens (37) bzw. der Diagnosesonde fluchtende Fläche (49) bildet.

3. Stopfen nach Anspruch 1 oder 2, **dadurch gekennzeichnet, dass** die Dichtung (27) einen radialen Bereich (29) aufweist.

4. Stopfen nach einem der vorhergehenden Ansprüchen, **dadurch gekennzeichnet, dass** die Dichtung (27) einen axialen Bereich (30) aufweist.

5. Stopfen nach einem der vorhergehenden Ansprüche, **dadurch gekennzeichnet, dass** im Abstand von der Dichtung (27) eine weitere Dichtung (31) vorgesehen ist.

6. Stopfen nach einem der vorhergehenden Ansprüche, **gekennzeichnet durch** einen Grundkörper (1), eine darin angeordnete Seele (2) und eine oder mehrere Weichkomponentendichtungen (17, 18; 23) zwischen dem Grundkörper (1) und der Seele (2).

7. Stopfen nach Anspruch 6, **gekennzeichnet durch** eine oder mehrere Weichkomponentendichtungen (19, 20; 27, 31) an der Außenseite des Grundkörpers (1).

8. Stopfen nach Anspruch 6 oder 7, **dadurch gekennzeichnet, dass** eine oder mehrere oder alle Weichkomponentendichtungen (17-20, 23, 27, 31) an den Grundkörper (1) angespritzt sind.

9. Stopfen nach Anspruch 7 oder 8, **dadurch gekennzeichnet, dass** in dem Grundkörper (1) ein Verbindungskanal (22) für die Weichkomponente vorgesehen ist.

10. Stopfen nach einem der Ansprüche 6 bis 9, **dadurch gekennzeichnet, dass** an der Außenseite der Seele (2) einer oder mehrere Wulste (13, 14) vorgesehen sind, die in die Weichkomponentendichtung (17, 18; 23) eindrückbar sind.

11. Stopfen nach Anspruch 10, **dadurch gekennzeichnet, dass** die Wulste (13,14) eine flache (15) und eine steile (16) Flanke aufweisen.

12. Stopfen nach einem der Ansprüche 6 bis 11, **dadurch gekennzeichnet, dass** die Weichkomponentendichtung zwischen dem Grundkörper (1) und der Seele (2) als durchgehende Innendichtung (23) ausgestaltet ist.

13. Stopfen nach einem der Ansprüche 6 bis 12, **dadurch gekennzeichnet, dass** die Seele (2) mit einem Kragen (33) versehen ist, der in dem Grundkörper (1) fixierbar ist.

14. Stopfen nach einem der Ansprüche 6 bis 13, **dadurch gekennzeichnet, dass** in dem Grundkörper (1) ein Entgasungsloch (41) vorgesehen ist.

15. Stopfen nach einem der Ansprüche 1 bis 14, **dadurch gekennzeichnet, dass** er als Gewindestopfen (37) ausgeführt ist.

16. Stopfen nach einem der Ansprüche 1 bis 15, **dadurch gekennzeichnet, dass** er zum Einsatz in eine Mehrzellen-Batterie dient.

## Claims

1. Plug or diagnostic probe for a battery, having a head (5) on which a seal (27) is provided, **characterised in that** the seal (27) has a sealing lip (28) directed radially outwards.

2. Plug according to claim 1, **characterised in that** the sealing lip (28) is deformable in such a manner that it forms a flat face (49) aligned with the surface (50) of the plug (37), or diagnostic probe.

3. Plug according to claim 1 or 2, **characterised in that** the seal (27) has a radial region (29).

4. Plug according to any one of the preceding claims, **characterised in that** the seal (27) has an axial region (30).

5. Plug according to any one of the preceding claims, **characterised in that** a further seal (31) is provided at a distance from the seal (27).

6. Plug according to any one of the preceding claims, **characterised by** a main body (1), a core (2) arranged therein and one or more soft-component seals (17, 18; 23) between the main body (1) and the core (2).

7. Plug according to claim 6, **characterised by** one or more soft-component seals (19, 20; 27, 31) on the outside of the main body (1).

8. Plug according to claim 6 or 7, **characterised in that** one or more or all of the soft-component seals (17-20, 23, 27, 31) are injection-moulded onto the main body (1).

9. Plug according to claim 7 or 8, **characterised in that** a connecting duct (22) for the soft component is provided in the main body (1).

10. Plug according to any one of claims 6 to 9, **characterised in that** one or more beads (13, 14) which can be pressed into the soft-component seal (17, 18; 23) are provided on the outside of the core (2).

11. Plug according to claim 10, **characterised in that** the beads (13, 14) have a flat (15) and a steep (16) flank.

12. Plug according to any one of claims 6 to 11, **characterised in that** the soft-component seal between the main body (1) and the core (2) is in the form of a continuous inner seal (23).

13. Plug according to any one of claims 6 to 12, **characterised in that** the core (2) is provided with a collar (33) which can be secured in the main body (1).

14. Plug according to any one of claims 6 to 13, **characterised in that** a de-gassing hole (41) is provided in the main body (1).

15. Plug according to any one of claims 1 to 14, **characterised in that** it is in the form of a threaded plug (37).

16. Plug according to any one of claims 1 to 15, **characterised in that** it serves for use in a multi-cell battery.

## Revendications

1. Bouchon ou sonde de diagnostic pour une batterie, comportant une tête (5), sur laquelle est prévu un joint d'étanchéité (27), **caractérisé en ce que** le joint d'étanchéité (27) comporte une lèvre d'étanchéité (28) dirigée radialement vers l'extérieur.

2. Bouchon selon la revendication 1, **caractérisé en ce que** la lèvre d'étanchéité (28) est déformable, de telle sorte qu'elle forme une surface (49) plane, alignée avec la face supérieure (50) du bouchon (37) ou de la sonde de diagnostic.

3. Bouchon selon la revendication 1 ou 2, **caractérisé en ce que** le joint d'étanchéité (27) comporte une zone radiale (29).

4. Bouchon selon l'une quelconque des revendications précédentes, **caractérisé en ce que** le joint d'étanchéité (27) comporte une zone axiale (30).

5. Bouchon selon l'une quelconque des revendications précédentes, **caractérisé en ce qu'**un joint d'étanchéité (31) supplémentaire est prévu à distance du joint d'étanchéité (27).

6. Bouchon selon l'une quelconque des revendications précédentes, **caractérisé par** un corps de base (1), une âme (2), disposée à l'intérieur de celui-ci, et un ou plusieurs joints d'étanchéité en composants souples (17, 18 ; 23) entre le corps de base (1) et l'âme (2).

7. Bouchon selon la revendication 6, **caractérisé par** un ou plusieurs joints d'étanchéité en composants souples (19, 20 ; 27, 31) sur la face extérieure du corps de base (1).

8. Bouchon selon la revendication 6 ou 7, **caractérisé en ce qu'**un ou plusieurs ou tous les joints d'étanchéité en composants souples (17-20, 23, 27, 31) sont déposés par pulvérisation sur le corps de base (1).

9. Bouchon selon la revendication 7 ou 8, **caractérisé en ce qu'**un canal de liaison (22) pour les composants souples est prévu dans le corps de base (1).

10. Bouchon selon l'une quelconque des revendications 6 à 9, **caractérisé en ce que** sur la face extérieure de l'âme (2) sont prévus un ou plusieurs bourrelets (13, 14), qui peuvent être enfoncés dans le joint d'étanchéité en composants souples (17, 18 ; 23).

11. Bouchon selon la revendication 10, **caractérisé en ce que** les bourrelets (13, 14) comportent un flanc plat (15) et un flanc très incliné (16).

12. Bouchon selon l'une quelconque des revendications 6 à 11, **caractérisé en ce que** le joint d'étanchéité en composants souples est configuré sous la forme d'un joint inférieur (23) continu entre le corps de base (1) et l'âme (2).

13. Bouchon selon l'une quelconque des revendications 6 à 12, **caractérisé en ce que** l'âme (2) est munie d'un collet (33), qui peut être fixé dans le corps de base (1).

14. Bouchon selon l'une quelconque des revendications 6 à 13, **caractérisé en ce qu'**un trou de dégazage (41) est prévu dans le corps de base (1).

15. Bouchon selon l'une quelconque des revendications 1 à 14, **caractérisé en ce qu'**il est réalisé sous la forme d'un bouchon fileté (37).

16. Bouchon selon l'une quelconque des revendications 1 à 15, **caractérisé en ce qu'**il est destiné à être mis en place dans une batterie à plusieurs éléments.
